# EUROPÄISCHE PATENTSCHRIFT

(11) **EP 3 056 754 B1**
(45) Veröffentlichungstag und Bekanntmachung des Hinweises auf die Patenterteilung: **14.03.2018**
(21) Anmeldenummer: 16150826.2
(22) Anmeldetag: 12.01.2016
(51) Int. Cl.: F16D 21/04, F16D 67/04, F16D 57/00, F16D 25/08, F16D 57/02, F16D 21/06

(54) **ANFAHREINHEIT FÜR EINEN ANTRIEBSSTRANG EINES KRAFTFAHRZEUGES**
STARTING UNIT FOR A DRIVE TRAIN OF A MOTOR VEHICLE
UNITE DE DEMARRAGE DE CHAINE CINEMATIQUE D'UN VEHICULE AUTOMOBILE

(30) Priorität: 12.02.2015 DE 102015202572
(43) Veröffentlichungstag der Anmeldung: 17.08.2016
(73) Patentinhaber: ZF Friedrichshafen AG, 88046 Friedrichshafen (DE)
(72) Erfinder: Wölfle, Bernd, 88074 Meckenbeuren (DE); Heimburger, Kevin, 88046 Friedrichshafen (DE)

(56) Entgegenhaltungen:
- WO-A1-2013/186102
- DE-A1- 10 004 286
- DE-A1-102004 034 388
- JP-A- H08 284 984
- US-A- 4 321 990

## Beschreibung

Die Erfindung betrifft eine Anfahreinheit für einen Antriebsstrang eines Kraftfahrzeuges, umfassend eine Dauerbremse und eine schaltbare, mechanische Trennkupplung mit zumindest einem Anfahrelement, welches in einem geschlossenen Zustand eine innerhalb des Antriebsstranges der Anbindung an eine Antriebsmaschine dienende Antriebsseite mit je einer Abtriebsseite verbindet, die innerhalb des Antriebsstranges für die Koppelung mit einem Kraftfahrzeuggetriebe vorgesehen ist. Des Weiteren betrifft die Erfindung einen Antriebsstrang mit einer vorgenannten Anfahreinheit.

Anfahreinheiten kommen in Antriebssträngen von Kraftfahrzeugen zur Anwendung, um bei Kraftfahrzeugen mit einer als Brennkraftmaschine ausgestalteten Antriebsmaschine ein Anfahren aus dem Stillstand heraus darstellen zu können. Üblicherweise ist die jeweilige Anfahreinheit dabei zwischen der Antriebsmaschine und einem nachgeschalteten Kraftfahrzeuggetriebe vorgesehen. Im Bereich der Nutzfahrzeuge werden in Antriebssträngen zudem häufig Dauerbremseinrichtungen als verschleißfreie Bremsen vorgesehen, um insbesondere im Zuge von langanhaltenden Bremsmanövern eine jeweilige Betriebsbremse des Nutzfahrzeuges zu entlasten. Die zum überwiegenden Teil als hydrodynamische Retarder ausgeführten Dauerbremsen werden, wenn sie als Primärretarder antriebsseitig des Kraftfahrzeuggetriebes angeordnet werden, häufig auch unmittelbar im Bereich der jeweiligen Anfahreinheit vorgesehen.

Aus der DE 41 22 628 A1 geht eine Anfahreinheit für einen Antriebsstrang eines Kraftfahrzeuges hervor, die eine schaltbare, mechanische Trennkupplung umfasst, wobei sich diese Trennkupplung aus zwei zu einer Doppelkupplung zusammengefassten Anfahrelementen zusammensetzt. Über jedes der Anfahrelemente wird in seinem geschlossenen Zustand dabei eine Verbindung zwischen einer Antriebsseite der Trennkupplung, an welcher innerhalb des Antriebsstranges eine Antriebsmaschine des Kraftfahrzeuges angebunden ist, zu je einer Abtriebsseite hergestellt, wobei mit den Abtriebsseiten der Trennkupplung dann innerhalb des Antriebsstranges je eine Getriebeeingangswelle eines nachgeschalteten Doppelkupplungsgetriebes verbunden ist. Im Bereich der Trennkupplung ist zudem eine Dauerbremse in Form eines hydrodynamischen Retarders vorgesehen, der trieblich mit der Antriebsseite der Trennkupplung verbunden ist, indem dessen Rotor entsprechend mit der Antriebsseite gekoppelt ist.

Schließlich ist aus der US 4 321 990 A eine Anfahreinheit für einen Antriebsstrang eines Kraftfahrzeuges bekannt geworden, die eine Dauerbremse und eine Trennkupplung umfasst. Dabei ist die Dauerbremse in die Trennkupplung integriert, indem die Dauerbremse axial zwischen dem zumindest einen Anfahrelement und mindestens einem Betätigungsaktuator des zumindest einen Anfahrelements aufgenommen ist.

Ausgehend vom vorstehend beschriebenen Stand der Technik ist es nun die Aufgabe der vorliegenden Erfindung, eine Anfahreinheit zu schaffen, bei welcher eine möglichst kompakte Anordnung einer Dauerbremse realisiert ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein eine erfindungsgemäße Anfahreinheit aufweisender Antriebsstrang eines Kraftfahrzeuges ist zudem Gegenstand von Anspruch 10.

Gemäß der Erfindung umfasst eine Anfahreinheit eine Dauerbremse und eine schaltbare, mechanische Trennkupplung mit zumindest einem Anfahrelement. Das zumindest eine Anfahrelement verbindet in einem geschlossenen Zustand eine Antriebsseite, welche innerhalb des Antriebsstranges der Anbindung an eine Antriebsmaschine dient, mit je einer Abtriebsseite, die innerhalb des Antriebsstranges für die Koppelung mit einem Kraftfahrzeuggetriebe vorgesehen ist. Im Sinne der Erfindung kann es sich bei dem zumindest einen Anfahrelement dabei um ein formschlüssiges Schaltelement handeln, bevorzugt liegt das zumindest eine Anfahrelement aber als kraftschlüssiges Schaltelement vor, welches trocken- oder nasslaufend gestaltet sein kann. Besonders bevorzugt ist das Anfahrelement hierbei als Lamellenkupplung ausgeführt.

Die Erfindung umfasst nun die technische Lehre, dass die Dauerbremse in die Trennkupplung integriert ist, indem die Dauerbremse axial zwischen dem zumindest einen Anfahrelement und mindestens einem Betätigungsaktuator des zumindest einen Anfahrelements aufgenommen ist. Mit anderen Worten ist die Dauerbremse also innerhalb der schaltbaren, mechanischen Trennkupplung vorgesehen und sitzt hier axial zwischen dem zumindest einen Anfahrelement und einem Aktuator, über welchen das zumindest eine Anfahrelement betätigbar ist.

Eine derartige Ausgestaltung einer Anfahreinheit hat dabei den Vorteil, dass durch die Integration der Dauerbremse in die Trennkupplung ein kompaktes Modul geschaffen werden kann, welches platzsparend innerhalb des Antriebsstranges zwischen der Antriebsmaschine und dem nachfolgenden Kraftfahrzeuggetriebe vorgesehen wird. Da hierdurch zudem eine vormontierbare Baugruppe geschaffen wird, ist eine Anordnung innerhalb des Antriebsstranges mit niedrigerem Montageaufwand möglich. Des Weiteren bietet die Integration der Dauerbremse im Falle von deren Ausgestaltung als hydrodynamische oder auch als hydrostatische Dauerbremse den Vorteil, dass Komponenten, wie Pumpen und Wärmetauscher, gemeinsam durch ein nasslaufendes Anfahrelement und die Dauerbremse genutzt werden können.

Bei der DE 41 22 628 A1 ist die Dauerbremse zwar im Bereich der mechanischen Trennkupplung vorgesehen, es ist aber nicht offenbart, die Dauerbremse dadurch in die Trennkupplung zu integrieren, indem diese zwischen den Anfahrelementen und den zugehörigen Betätigungsaktuatoren platziert wird. Es wird daher im Falle der DE 41 22 628 A1 kein Modul aus Trennkupplung und Dauerbremse geschaffen.

Entsprechend der Erfindung ist die Dauerbremse radial innenliegend zu dem mindestens einen Betätigungsaktuator platziert. In der Folge kann die Dauerbremse radial weit innenliegend angeordnet und damit auch radial kompakt bauend realisiert werden, was insbesondere bei deren Ausgestaltung als hydrodynamische Dauerbremse deren dynamische Abdichtung vereinfacht, da die flüssigkeitsführenden Komponenten der Dauerbremse folglich geringe Durchmesser aufweisen.

In Weiterbildung der Erfindung ist der mindestens eine Betätigungsaktuator mit dem zumindest einen Anfahrelement dann über je ein Übertragungsglied gekoppelt, welches von dem mindestens einen Betätigungsaktuator nach radial innen führt und dort mit einer weiteren Betätigungsmechanik des zumindest einen Anfahr-elements verbunden ist. Hierdurch kann der zumindest eine Betätigungsaktuator radial weiter außen liegend vorgesehen werden, so dass eben die innenliegende Anordnung der Dauerbremse möglich wird, ohne dass es zu einer Kollision zwischen Betätigungsaktuator und Dauerbremse kommen kann. Das Übertragungsglied ist dabei insbesondere als Blechteil ausgeführt und kann neben dem radial nach innen verlaufenden Abschnitt noch ein oder mehrere axiale Abschnitte zur Anbindung an den Betätigungsaktuator und auch die weitere Betätigungsmechanik aufweisen. Die weitere Betätigungsmechanik setzt sich dann bevorzugt aus einem Ausrücklager, ggf. einer Distanzhülse und einer Tellerfeder zusammen, von welchen Letztere dann auf das Anfahrelement einwirkt.

Gemäß einer zusätzlichen Weiterbildungsmöglichkeit der vorgenannten Ausführungsform ist das Übertragungsglied mit Rippen ausgestattet, so dass eine ausreichende Festigkeit zur Übertragung der Stellbewegung des Betätigungsaktuators auf die weitere Betätigungsmechanik verwirklicht werden kann.

Es ist eine weitere Ausgestaltungsmöglichkeit der Erfindung, die dabei unabhängig oder auch ergänzend zu den vorgenannten Ausführungen zur Anwendung kommen kann, dass die Trennkupplung zwei Anfahrelemente aufweist, denen jeweils mindestens ein Betätigungsaktuator zugeordnet ist und über die jeweils je eine Verbindung der Antriebsseite mit jeweils einer Abtriebsseite hergestellt werden kann. In diesem Fall ist die Trennkupplung also nach Art einer Doppelkupplung gestaltet, bei welcher zwei Anfahrelemente zusammengefasst sind und bei Betätigung jeweils eine drehfeste Verbindung der Antriebsseite mit der je zugehörigen Abtriebsseite herstellen.

In Weiterbildung der vorgenannten Ausgestaltungsmöglichkeit sind den Anfahrelementen dann jeweils mehrere Betätigungsaktuatoren zugeordnet, wobei die dem einen Anfahrelement und die dem anderen Anfahrelement jeweils zugehörigen Betätigungsaktuatoren in Umfangsrichtung alternierend aufeinanderfolgend angeordnet sind. Hierdurch kann eine gleichmäßige Bestätigung des jeweiligen Anfahrelements dargestellt werden, indem über mehrere Betätigungsaktuatoren gleichmäßig auf das jeweilige Ausrücklager eingewirkt wird. Besonders bevorzugt sind die Betätigungsaktuatoren dabei äquidistant zueinander angeordnet.

In Weiterbildung der Erfindung, welche dabei unabhängig oder auch ergänzend zu den vorgenannten Ausführungsformen realisiert sein kann, ist die Dauerbremse trieblich mit der Antriebsseite verbunden. In der Folge wird die Dauerbremse als Primärretarder gestaltet, über welche ein entsprechendes Bremsmoment antriebsseitig des Kraftfahrzeuggetriebes eingespeist werden kann.

Entsprechend einer weiteren Ausführungsform der Erfindung ist die Dauerbremse als hydrodynamischer Retarder ausgeführt. Dabei setzt sie sich auf dem Fachmann prinzipiell bekannte Art und Weise aus einem Rotor und einem Stator zusammen, die jeweils mit Beschaufelungen versehen sind und gemeinsam einen zwischenliegenden Arbeitsraum definieren. Zur Darstellung eines Bremsmoments wird in diesen Arbeitsraum dann eine Flüssigkeit, insbesondere in Form von Öl oder Wasser, eingebracht, welche über die Beschaufelung des drehenden Rotors mitgenommen und in Richtung der Beschaufelung des stehenden Stators gefördert wird, wo sie sich abstützt und im Folgenden wieder zurück zum Rotor strömt. Dies wirkt entsprechend verzögernd auf den Rotor. Eine triebliche Verbindung ist hierbei bevorzugt über eine Mitnahmeverzahnung gestaltet, über welche der Rotor entsprechend mitgeführt wird. Eine Abstützung von Axialkräften erfolgt dabei dann zudem insbesondere über ein entsprechendes Wälzlager, mit welchem der Rotor gegenüber dem Stator drehbar gelagert ist. Im Rahmen der Erfindung kann die Dauerbremse prinzipiell aber auch als hydrostatischer Retarder oder ggf. auch als elektrodynamischer Retarder gestaltet sein.

In Weiterbildung der Erfindung ist der mindestens eine Betätigungsaktuator als Hydraulikzylinder ausgeführt, welcher bei Druckbeaufschlagung ein Öffnen des zumindest einen Anfahrelements einleitet. Erfindungsgemäß können jedoch auch anderweitige Aktuatoren, beispielsweise elektromechanische Aktuatoren, vorgesehen sein.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung einer bevorzugten Ausführungsform der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Eine vorteilhafte Ausführungsform der Erfindung, die nachfolgend erläutert wird, ist in den Zeichnungen dargestellt. Es zeigt:
- Fig. 1: eine Schnittdarstellung einer Anfahreinheit entsprechend einer bevorzugten Ausführungsform der Erfindung; und
- Fig. 2: eine Draufsicht eines Teils der Anfahreinheit aus Fig. 1.

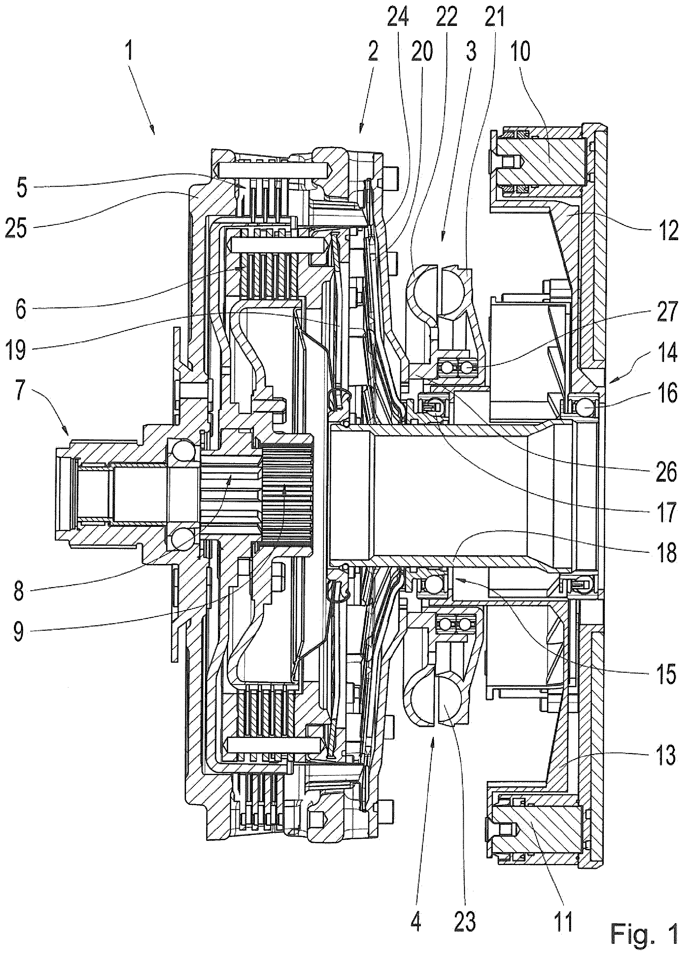

Aus Fig. 1 geht eine Schnittansicht einer Anfahreinheit 1 entsprechend einer bevorzugten Ausführungsform der Erfindung hervor. Diese Anfahreinheit 1 setzt sich dabei im Wesentlichen aus einer mechanischen Trennkupplung 2 und einer Dauerbremse 3 in Form eines hydrodynamischen Retarders 4 zusammen, wobei die Trennkupplung 2 nach Art einer Doppelkupplung ausgestaltet ist und zwei Anfahrelemente 5 und 6 zu einer Baugruppe zusammenfasst. Die Anfahrelemente 5 und 6 sind dabei jeweils als formschlüssige Schaltelemente in Form nasslaufender Lamellenkupplungen realisiert.

Über die Anfahrelemente 5 und 6 wird jeweils bei einer jeweiligen Betätigung eine drehfeste Verbindung einer Antriebsseite 7 zu jeweils einer Abtriebsseite 8 bzw. 9 hergestellt, wobei die Antriebsseite 7 im verbauten Zustand der Anfahreinheit 1 in einem Antriebsstrang eines Kraftfahrzeuges der Anbindung an eine Abtriebswelle einer Antriebsmaschine des Kraftfahrzeuges dient, während an die Abtriebsseiten 8 und 9 jeweils Getriebeeingangswellen eines nachgeschalteten Kraftfahrzeuggetriebes anknüpfen, welches als Doppelkupplungsgetriebe gestaltet ist. Den Anfahrelementen 5 und 6 sind dabei jeweils mehrere Betätigungsaktuatoren 10 bzw. 11 zugeordnet, die jeweils als Hydraulikzylinder ausgeführt sind.

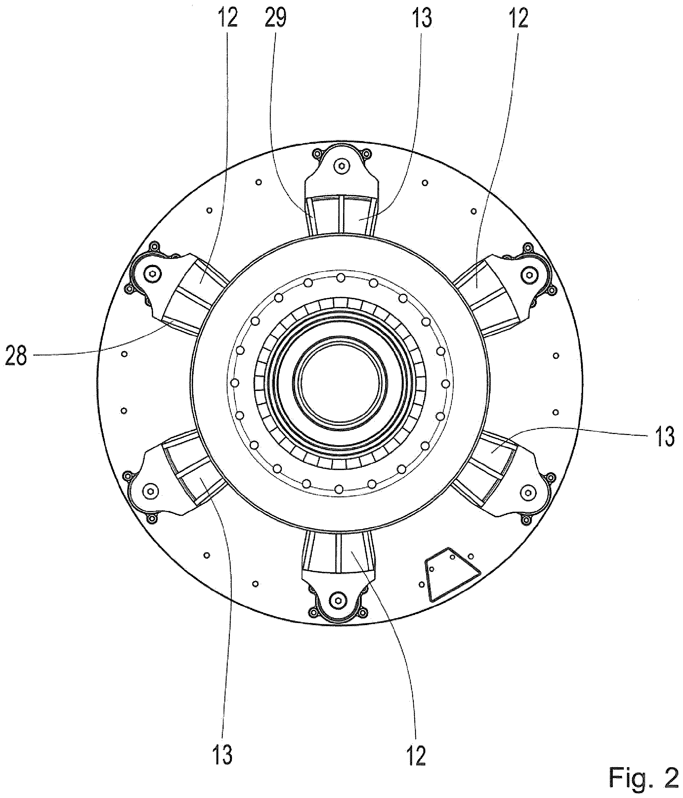

An dem jeweiligen Betätigungsaktuator 10 bzw. 11 knüpft dann jeweils ein Übertragungsglied 12 bzw. 13 an, welches eine Stellbewegung des jeweiligen Betätigungsaktuators 10 bzw. 11 auf eine weitere Betätigungsmechanik 14 bzw. 15 des jeweiligen Anfahrelements 6 bzw. 5 überträgt. Die Übertragungsglieder 12 und 13 sind dabei jeweils als Blechteile ausgeführt, wobei sowohl die Übertragungsglieder 12 und 13 als auch die jeweiligen Betätigungsaktuatoren 10 und 11 in Umfangsrichtung betrachtet abwechselnd aufeinanderfolgend und äquidistant zueinander angeordnet vorgesehen sind. Dieser Umstand ist dabei insbesondere in der weiteren Fig. 2 zu sehen.

Die an den Übertragungsgliedern 12 und 13 jeweils anknüpfende Betätigungsmechanik 14 bzw. 15 setzt sich jeweils aus je einem Ausrücklager 16 bzw. 17, im Falle der Betätigungsmechanik 14 einer Hülse 18, sowie je einer Tellerfeder 19 bzw. 20 zusammen, wobei Letztere dann entsprechend auf das jeweilige Anfahrelement 6 bzw. 5 einwirkt.

Der hydrodynamische Retarder 4 setzt sich auf dem Fachmann bekannte Art und Weise aus einem Stator 21 und einem Rotor 22 zusammen, welche jeweils mit je einer Beschaufelung ausgestattet sind und einen zwischenliegenden Arbeitsraum 23 definieren. In diesen Arbeitsraum 23 kann dabei eine Flüssigkeit, insbesondere in Form von Öl oder Wasser, eingebracht werden, welche daraufhin durch die Beschaufelung des drehenden Rotors 22 mitgenommen und in Richtung der Beschaufelung des Stators 21 gefördert wird, wo sie sich abstützt und im Folgenden wieder zu der Beschaufelung des Rotors 22 zurückgeleitet wird. Dort wirkt sie entsprechend verzögernd auf den Rotor 22, so dass an diesem ein verzögerndes Moment auftritt.

Als Besonderheit ist der hydrodynamische Retarder 4 bei der Anfahreinheit 1 in die Trennkupplung 2 integriert, indem er axial zwischen den Anfahrelementen 5 und 6 und deren Betätigungsaktuatoren 10 und 11 angeordnet ist. Des Weiteren sind der Stator 21 und der Rotor 22 radial sehr dicht am Zentrum der Anfahreinheit 1 vorgesehen, um eine dynamische Abdichtung des hydrodynamischen Retarders 4 aufgrund der dann geringen Durchmesser von Stator 21 und Rotor 22 zu ermöglichen. Um hierbei keine axiale Kollision mit den Betätigungsaktuatoren 10 und 11 bei deren Betätigung hervorzurufen, sind die Betätigungsaktuatoren 10 und 11 entsprechend radial außenliegend zum hydrodynamischen Retarder 4 vorgesehen. Eine jeweilige Stellbewegung des einzelnen Betätigungsaktuators 10 bzw. 11 wird dann über das jeweilige Übertragungsglied 12 bzw. 13 auf die nachfolgende Betätigungsmechanik 14 bzw. 15 übertragen, indem sich das jeweilige Übertragungsglied 12 bzw. 13 ausgehend vom Betätigungsaktuator 10 bzw. 11 nach radial innen erstreckt und dort mit dem jeweiligen Ausrücklager 16 bzw. 17 in Kontakt steht.

Wie ferner aus Fig. 1 zu erkennen ist, ist der Rotor 22 des hydrodynamischen Retarders 4 dadurch mit der Antriebsseite 7 der Anfahreinheit 1 verbunden, indem er drehfest mit einer Platte 24 gekoppelt ist, die Teil eines die Anfahrelemente 5 und 6 einschließenden Kupplungsgehäuses 25 ist, welches eben drehfest mit der Antriebsseite 7 in Verbindung steht. Eine Drehmomentübertragung von der Platte 24 auf den Rotor 22 ist dabei über eine - vorliegend nicht weiter im Detail dargestellte - Mitnahmeverzahnung 26 realisiert, die zudem radiale Bewegungen des Kupplungsgehäuses 25 ausgleicht. Um zudem Axialkräfte des insgesamt als Primärretarder angeordneten hydrodynamischen Retarders 4 aufzunehmen, ist dieser über ein Doppellager 27 drehbar gegenüber dem Stator 21 gelagert.

Schließlich ist noch insbesondere in Fig. 2 zu sehen, dass die Übertragungsglieder 12 und 13 jeweils mit mehreren Rippen 28 bzw. 29 ausgestattet sind, um eine ausreichende Steifigkeit bei Übertragung einer Stellbewegung des jeweiligen Betätigungsaktuators 10 bzw. 11 zu verwirklichen.

Mittels der erfindungsgemäßen Ausgestaltung einer Anfahreinheit kann eine Dauerbremse auf kompakte Art und Weise in eine mechanische Trennkupplung integriert werden, wodurch insgesamt ein platzsparender Aufbau möglich wird. Zudem kann durch die Integration bei Ausgestaltung der Dauerbremse als hydrodynamischer oder ggf. auch als hydrostatischer Retarder eine gemeinsame Nutzung von Pumpen und Wärmetauschern vorgenommen werden.

### Bezugszeichen

- 1: Anfahreinheit
- 2: Trennkupplung
- 3: Dauerbremse
- 4: hydrodynamischer Retarder
- 5: Anfahrelement
- 6: Anfahrelement
- 7: Antriebsseite
- 8: Abtriebsseite
- 9: Abtriebsseite
- 10: Betätigungsaktuator
- 11: Betätigungsaktuator
- 12: Übertragungsglied
- 13: Übertragungsglied
- 14: Betätigungsmechanik
- 15: Betätigungsmechanik
- 16: Ausrücklager
- 17: Ausrücklager
- 18: Hülse
- 19: Tellerfeder
- 20: Tellerfeder
- 21: Stator
- 22: Rotor
- 23: Arbeitsraum
- 24: Platte
- 25: Kupplungsgehäuse
- 26: Mitnahmeverzahnung
- 27: Doppellager
- 28: Rippe
- 29: Rippe

## Patentansprüche

1. Anfahreinheit (1) für einen Antriebsstrang eines Kraftfahrzeuges, umfassend eine Dauerbremse (3) und eine schaltbare, mechanische Trennkupplung (2) mit zumindest einem Anfahrelement (5, 6), welches in einem geschlossenen Zustand eine innerhalb des Antriebsstranges der Anbindung an eine Antriebsmaschine dienende Antriebsseite (7) mit je einer Abtriebsseite (8, 9) verbindet, die innerhalb des Antriebsstranges für die Koppelung mit einem Kraftfahrzeuggetriebe vorgesehen ist, wobei die Dauerbremse (3) in die Trennkupplung (2) integriert ist, indem die Dauerbremse (3) axial zwischen dem zumindest einen Anfahrelement (5, 6) und mindestens einem Betätigungsaktuator (10, 11) des zumindest einen Anfahrelements (5, 6) aufgenommen ist, **dadurch gekennzeichnet, dass** die Dauerbremse (3) radial innenliegend zu dem mindestens einen Betätigungsaktuator (10, 11) platziert ist.

2. Anfahreinheit (1) nach Anspruch 1, **dadurch gekennzeichnet, dass** der mindestens eine Betätigungsaktuator (10, 11) mit dem zumindest einen Anfahrelement (5, 6) über je ein Übertragungsglied (12, 13) gekoppelt ist, welches von dem mindestens einen Betätigungsaktuator (10, 11) nach radial innen führt und dort mit einer weiteren Betätigungsmechanik (14, 15) des zumindest einen Anfahrelements (5, 6) verbunden ist.

3. Anfahreinheit (1) nach Anspruch 2, **dadurch gekennzeichnet, dass** das Übertragungsglied (12, 13) mit Rippen (28, 29) ausgestattet ist.

4. Anfahreinheit (1) nach Anspruch 1, **dadurch gekennzeichnet, dass** die Trennkupplung (2) zwei Anfahrelemente (5, 6) aufweist, denen jeweils mindestens ein Betätigungsaktuator (10, 11) zugeordnet ist und über die jeweils je eine Verbindung der Antriebsseite (7) mit jeweils einer Abtriebsseite (8, 9) herstellbar ist.

5. Anfahreinheit (1) nach Anspruch 4, **dadurch gekennzeichnet, dass** den Anfahrelementen (5, 6) jeweils mehrere Betätigungsaktuatoren (10, 11) zugeordnet sind, wobei die dem einen Anfahrelement (5) und die dem anderen Anfahrelement (6) jeweils zugehörigen Betätigungsaktuatoren (10, 11) in Umfangsrichtung alternierend aufeinanderfolgend angeordnet sind.

6. Anfahreinheit (1) nach Anspruch 1, **dadurch gekennzeichnet, dass** die Dauerbremse (3) trieblich mit der Antriebsseite (7) verbunden ist.

7. Anfahreinheit (1) nach Anspruch 1, **dadurch gekennzeichnet, dass** die Dauerbremse (3) als hydrodynamischer Retarder (4) ausgeführt ist.

8. Anfahreinheit (1) nach Anspruch 1, **dadurch gekennzeichnet, dass** der mindestens einen Betätigungsaktuator (10, 11) als Hydraulikzylinder ausgeführt ist, welcher bei Druckbeaufschlagung ein Öffnen des zumindest einen Anfahrelements (5, 6) einleitet.

9. Antriebsstrang für ein Kraftfahrzeug, umfassend eine Anfahreinheit (1) nach einem oder mehreren der Ansprüche 1 bis 8.

## Claims

1. Launch unit (1) for a drivetrain of a motor vehicle, comprising a retarder (3) and a switchable mechanical separating clutch (2) with at least one launch element (5, 6) which, in a closed state, connects a drive side (7), which within the drivetrain serves for the connection to a drive machine, to each case one output side (8, 9), which is provided within the drivetrain for the coupling to a motor vehicle transmission, wherein the retarder (3) is integrated into the separating clutch (2) by virtue of the retarder (3) being accommodated axially between the at least one launch element (5, 6) and at least one operating actuator (10, 11) of the at least one launch element (5, 6), **characterized in that** the retarder (3) is positioned radially to the inside of the at least one operating actuator (10, 11).

2. Launch unit (1) according to Claim 1, **characterized in that** the at least one operating actuator (10, 11) is coupled to the at least one launch element (5, 6) by means of in each case one transmission member (12, 13) which leads radially inward from the at least one operating actuator (10, 11) and which is connected there to a further actuation mechanism (14, 15) of the at least one launch element (5, 6).

3. Launch unit (1) according to Claim 2, **characterized in that** the transmission member (12, 13) is equipped with ribs (28, 29).

4. Launch unit (1) according to Claim 1, **characterized in that** the separating clutch (2) has two launch elements (5, 6) which are assigned in each case at least one operating actuator (10, 11) and by means of which in each case one connection of the drive side (7) to in each case one output side (8, 9) can be produced.

5. Launch unit (1) according to Claim 4, **characterized in that** the launch elements (5, 6) are assigned in each case multiple operating actuators (10, 11), wherein the operating actuators (10, 11) respectively assigned to one launch element (5) and to the other launch element (6) are arranged in succession in alternating fashion in the circumferential direction.

6. Launch unit (1) according to Claim 1, **characterized in that** the retarder (3) is connected in terms of drive to the drive side (7).

7. Launch unit (1) according to Claim 1, **characterized in that** the retarder (3) is designed as a hydrodynamic retarder (4).

8. Launch unit (1) according to Claim 1, **characterized in that** the at least one operating actuator (10, 11) is formed as a hydraulic cylinder which, when charged with pressure, initiates an opening of the at least one launch element (5, 6).

9. Drivetrain for a motor vehicle, comprising a launch unit (1) according to one or more of Claims 1 to 8.

## Revendications

1. Unité de démarrage (1) pour une chaîne cinématique d'un véhicule automobile, comprenant un frein permanent (3) et un embrayage de séparation mécanique commutable (2) avec au moins un élément de démarrage (5, 6), qui dans un état fermé relie un côté d'entraînement (7) servant à l'intérieur de la chaîne cinématique à la liaison à une machine d'entraînement respectivement avec un côté de sortie (8, 9), qui est prévu à l'intérieur de la chaîne cinématique pour le couplage à une boîte de vitesses du véhicule automobile, dans laquelle le frein permanent (3) est intégré dans l'embrayage de séparation (2), du fait que le frein permanent (3) est agencé axialement entre ledit au moins un élément de démarrage (5, 6) et au moins un actionneur d'actionnement (10, 11) dudit au moins un élément de démarrage (5, 6), **caractérisée en ce que** le frein permanent (3) est placé en position radialement intérieure par rapport audit au moins un actionneur d'actionnement (10, 11).

2. Unité de démarrage (1) selon la revendication 1, **caractérisée en ce que** ledit au moins un actionneur d'actionnement (10, 11) est couplé audit au moins un élément de démarrage (5, 6) chaque fois par un organe de transmission (12, 13), qui conduit radialement vers l'intérieur à partir dudit au moins un actionneur d'actionnement (10, 11) et qui y est relié à un autre mécanisme d'actionnement (14, 15) dudit au moins un élément de démarrage (5, 6).

3. Unité de démarrage (1) selon la revendication 2, **caractérisée en ce que** l'organe de transmission (12, 13) est muni de nervures (28, 29).

4. Unité de démarrage (1) selon la revendication 1, **caractérisée en ce que** l'embrayage de séparation (2) présente deux éléments de démarrage (5, 6), auxquels est associé respectivement au moins un actionneur d'actionnement (10, 11) et par lesquels une liaison du côté d'entraînement (7) peut chaque fois être établie respectivement avec un côté de sortie (8, 9).

5. Unité de démarrage (1) selon la revendication 4, **caractérisée en ce que** plusieurs actionneurs d'actionnement (10, 11) sont respectivement associés aux éléments de démarrage (5,6), dans laquelle les actionneurs d'actionnement (10, 11) correspondant respectivement au premier élément de démarrage (5) et ceux qui correspondent à l'autre élément de démarrage (6) sont disposés successivement en alternance dans la direction périphérique.

6. Unité de démarrage (1) selon la revendication 1, **caractérisée en ce que** le frein permanent (3) est relié cinématiquement au côté d'entraînement (7).

7. Unité de démarrage (1) selon la revendication 1, **caractérisée en ce que** le frein permanent (3) est constitué par un ralentisseur hydrodynamique (4).

8. Unité de démarrage (1) selon la revendication 1, **caractérisée en ce que** ledit au moins un actionneur d'actionnement (10, 11) est constitué par un cylindre hydraulique, qui sous l'action d'une pression provoque une ouverture dudit au moins un élément de démarrage (5, 6).

9. Chaîne cinématique pour un véhicule automobile, comprenant une unité de démarrage (1) selon l'une quelconque des revendications 1 à 8.
